# EUROPÄISCHE PATENTSCHRIFT

(11) **EP 3 263 205 B1**
(45) Veröffentlichungstag und Bekanntmachung des Hinweises auf die Patenterteilung: **06.05.2020**
(21) Anmeldenummer: 17178656.9
(22) Anmeldetag: 29.06.2017
(51) Int. Cl.: B01D 33/09

(54) **VAKUUM- UND/ODER DRUCK-TROMMELFILTERVORRICHTUNG**
VACUUM AND/OR PRESSURE DRUM FILTER DEVICE
DISPOSITIF DE FILTRE À TAMBOUR DE PRESSION ET/OU À VIDE

(30) Priorität: 29.06.2016 DE 102016111924
(43) Veröffentlichungstag der Anmeldung: 03.01.2018
(73) Patentinhaber: Andritz KMPT GmbH, 85256 Vierkirchen (DE)
(72) Erfinder: KNOBLOCH, Wolfgang, 82327 Tutzing, Unterzeismering (DE); SCHERER, Dieter, 85276 Pfaffenhofen (DE)
(74) Vertreter: Viering, Jentschura & Partner mbB Patent- und Rechtsanwälte

(56) Entgegenhaltungen:
- DE-A1- 1 536 940
- DE-B- 1 204 628
- DE-C- 846 391
- GB-A- 379 053

## Beschreibung

Die vorliegende Erfindung betrifft eine Vakuum- und/oder Druck-Trommelfiltervorrichtung zum Filtern eines Feststoffmaterials aus einer Suspension. Trommelfiltervorrichtungen werden z.B. bei chemischen, pharmazeutischen und biologischen Anwendungen im industriellen Maßstab zur Filtration von Suspensionen (Fest-Flüssig-Gemischen) eingesetzt. Herkömmliche Trommelfiltervorrichtungen weisen eine drehbare Filtertrommel, die um ihre Horizontal-Längsachse drehbar ist, und eine Wanne zur Aufnahme der zu filtrierenden Suspension auf, in welche die Filtertrommel eintaucht. An der Mantelfläche der Filtertrommel sind Filterzellen angeordnet, an die Filtrat-Rohre zum Abführen des Filtrats (flüssige Phase der Suspension) angeschlossen sind. Die zu filtrierende Suspension wird den Filterzellen von außerhalb der Filtertrommel zugeführt. Durch ein Filtermedium hindurch wird das Filtrat an die Filtrat-Rohre abgegeben, während ein Filterkuchen in/an den Filterzellen verbleibt. Das Abgeben des Filtrats erfolgt über eine Druckdifferenz, entweder durch Beaufschlagen der Suspension mit Druck (Druck-Trommelfiltervorrichtung) oder durch Beaufschlagen der Filtrat-Rohre bzw. der Filterzellen mit Vakuum (Vakuum-Trommelfiltervorrichtung). Eine Trommelfiltervorrichtung der obengenannten Art ist z.B. in DE 25 06 527 A1 und GB379053 gezeigt.

Durch die Erfindung wird eine Vakuum- und/oder Druck-Trommelfiltervorrichtung zum Filtern eines Feststoffmaterials aus einer Suspension geschaffen, die im Hinblick auf ihre Beständigkeit gegenüber Korrosion verbessert herstellbar ist.

Hierzu stellt die vorliegende Erfindung eine Vakuum- und/oder Druck-Trommelfiltervorrichtung zum Filtern eines Feststoffmaterials aus einer Suspension gemäß Anspruch 1 bereit. Weitere Ausgestaltungen der erfindungsgemäßen Vakuum- und/oder Druck-Trommelfiltervorrichtung sind in den abhängigen Ansprüchen beschrieben.

Gemäß verschiedenen Aspekten der vorliegenden Erfindung hat eine Vakuum- und/oder Druck-Trommelfiltervorrichtung zum Filtern eines Feststoffmaterials aus einer Suspension, die von dem Feststoffmaterial und einer Flüssigkeit gebildet ist, eine Filtertrommel, welche einen trommelförmigen inneren Grundkörper, der aus einem zumindest größtenteils starren Grundkörper-Material hergestellt ist und der eine Grundkörperlängsachse definiert, und einen trommelförmigen äußeren Funktionskörper aufweist, der aus einem zumindest größtenteils starren Funktionskörper-Material hergestellt ist und der den inneren Grundkörper (außen) unter Ausbildung einer (nach außen hin) fluiddichten Einkapselung des inneren Grundkörpers umgibt, zum Beispiel sodass kein Fluid (von außen her) durch den äußeren Funktionskörper hindurch an den inneren Grundkörper gelangen kann. Die Filtertrommel kann zum Beispiel drehbar sein, und die Vakuum- und/oder Druck-Trommelfiltervorrichtung kann eine Antriebseinrichtung zum drehbaren Betreiben der Filtertrommel aufweisen. Die Filtertrommel kann zum Beispiel zylinderförmig sein. Die Filtertrommel kann zum Beispiel eine Filterfläche von größer gleich 0,1 m² oder größer gleich 10 m² oder größer gleich 100 m² aufweisen. Der innere Grundkörper kann zum Beispiel zylinderförmig sein. Der innere Grundkörper kann zum Beispiel aus einem einzigen oder verschiedenen Grundkörper-Materialen hergestellt sein. Der innere Grundkörper kann zum Beispiel einstückig/integral oder aus mehreren Bauteilen zusammengesetzt sein. Der äußere Funktionskörper kann zum Beispiel aus einem einzigen oder verschiedenen Funktionskörper-Materialen hergestellt sein. Der äußere Funktionskörper kann zum Beispiel aus mehreren Bauteilen zusammengesetzt sein. Der äußere Funktionskörper kann den inneren Grundkörper zum Beispiel zu mehr als 70% oder zu mehr als 80% oder zu mehr als 90% oder im Wesentlichen vollständig oder vollständig umgeben. Das Funktionskörper-Material kann zum Beispiel (gegenüber der Suspension) korrosionsbeständig sein. Der innere Grundkörper kann zum Beispiel Stabilität gegen Druckkräfte haben und als Stützkörper für den äußeren Funktionskörper dienen, wobei äußere, auf den äußeren Funktionskörper einwirkende Kräfte (zumindest) größtenteils von dem inneren Funktionskörper getragen bzw. abgetragen werden. Der äußere Funktionskörper kann zum Beispiel stabil genug sein um Funktionsbauteile zu tragen bzw. die durch die Funktionsbauteile erzeugten inneren Kräfte sicher an den inneren Grundkörper weiterleiten. Der äußere Funktionskörper kann zum Beispiel (zumindest) größtenteils am inneren Grundkörper abgestützt sein. Der innere Grundkörper ist zum Beispiel mittels des äußeren Funktionskörpers zur Außenseite hin, z.B. nach außen hin, fluiddicht umgeben, sodass keine Suspension an den inneren Grundkörper gelangen kann. Ein Innenraum, welcher von dem äußeren Funktionskörper umgeben ist, kann zum Beispiel fluiddicht gegenüber einem entsprechenden Außenraum sein, sodass keine Suspension in den Innenraum gelangt, in welchem der innere Grundkörper angeordnet ist.

Im Sinne dieser Anmeldung können die Ausdrücke "größtenteils" und "zumindest größtenteils" zum Beispiel zu mehr als 50%, wenigstens 60%, wenigstens 70%, wenigstens 80%, wenigstens 90%, wenigstens 95%, im Wesentlichen vollständig oder vollständig bedeuten.

Im Sinne dieser Anmeldung beschreibt der Ausdruck "im Wesentlichen" die in der Technik auftretenden Toleranzen. Im Sinne dieser Anmeldung umfasst der Ausdruck "zumindest im Wesentlichen" die genannte Größe bzw. Form bzw. Eigenschaft und die in der Technik auftretenden Toleranzen.

Der innere Grundkörper ist von dem äußeren Funktionskörper zumindest größtenteils formschlüssig anliegend sowie (zumindest) größtenteils nicht am inneren Grundkörper anhaftend umgeben, sodass der äußere Funktionskörper zumindest größtenteils eine äußere Verkleidung des inneren Grundkörpers bildet, die am inneren Grundkörper (bzw. an dessen Außenseite) nicht fluiddicht anliegt, die aber von dem inneren Grundkörper gegen äußere Kräfte abgestützt ist. D.h., dass der innere Grundkörper den äußeren Funktionskörper gegen äußere auf den Funktionskörper einwirkende Kräfte abstützen kann bzw. abstützt und/oder dass zum Beispiel ein Fluid zwischen dem inneren Grundkörper und dem äußeren Funktionskörper vorhanden sein kann. Der äußere Funktionskörper ist zum Beispiel (zumindest) größtenteils nicht-anhaftend bzw. nicht-adhäsiv mit dem inneren Grundkörper verbunden. Der äußere Funktionskörper kann zum Beispiel zu mehr als 50%, zu mehr als 60%, zu mehr als 70%, zu mehr als 80%, zu mehr als 90%, zu mehr als 95%, im Wesentlichen vollständig oder vollständig nicht-anhaftend bzw. nicht-adhäsiv mit dem inneren Grundkörper verbunden sein. Das bedeutet, dass der äußere Funktionskörper zum Beispiel nicht, im Wesentlichen nicht, zu weniger als 5%, zu weniger als 10%, zu weniger als 20%, zu weniger als 30%, zu weniger als 40% oder zu weniger als 50% adhäsiv bzw. anhaftend mit dem inneren Grundkörper verbunden ist.

Die Vakuum- und/oder Druck-Trommelfiltervorrichtung hat ferner eine oder mehrere Rohrleitungen zum Abführen der Flüssigkeit (welche im Rahmen des Filtervorgangs von dem Feststoff getrennt wird) von der Filtertrommel, welche jeweils an dem äußeren Funktionskörper befestigt sind und welche jeweils zumindest größtenteils nur indirekt über den äußeren Funktionskörper an dem inneren Grundkörper angebracht sind. Die Rohrleitungen können zum Beispiel so am äußeren Funktionskörper befestigt sein, dass sie den inneren Grundkörper nicht berühren. Die Rohrleitungen können zum Beispiel so am äußeren Funktionskörper befestigt sein, dass ein Ende davon am äußeren Funktionskörper angeschlossen ist, um die Flüssigkeit von einer Außenseite (z.B. einem Filtertrommel-Mantel) der Filtertrommel abzuführen. Die Rohrleitungen können zum Beispiel durch den inneren Grundkörper hindurch verlaufen. Die Rohrleitungen können zum Beispiel (zumindest) größtenteils im Innern des inneren Grundkörpers angeordnet sein. Die Rohrleitungen können zum Beispiel vollständig außerhalb des inneren Grundkörpers angeordnet sein. Die Rohrleitungen können zum Beispiel aus dem gleichen Material wie der äußere Funktionskörper sein. Die Rohrleitungen können zum Beispiel fluiddicht an dem äußeren Funktionskörper befestigt sein. Anschlussbauteile für die Rohrleitungen können zum Beispiel fluiddicht an dem äußeren Funktionskörper befestigt sein, und die Rohrleitungen können zum Beispiel fluiddicht mit den Anschlussbauteilen verbunden sein.

Der trommelförmige innere Grundkörper kann optional eine Grundkörper-Umfangswand, die sich um die Grundkörperlängsachse herum erstreckt, sowie eine erste und eine zweite Grundkörper-Stirnwand aufweisen, die entlang der Grundkörperlängsachse im Abstand voneinander angeordnet sind. Die Grundkörper-Umfangswand kann zum Beispiel zylinderförmig sein. Die erste Grundkörper-Stirnwand kann zum Beispiel scheibenförmig sein. Die zweite Grundkörper-Stirnwand kann zum Beispiel scheibenförmig sein. Die erste Grundkörper-Stirnwand und die zweite Grundkörper-Stirnwand können zum Beispiel (zumindest im Wesentlichen) parallel zueinander angeordnet sein.

Der trommelförmige äußere Funktionskörper kann optional eine Funktionskörper-Umfangswand, die sich um die Grundkörperlängsachse herum erstreckt, sowie eine erste und eine zweite Funktionskörper-Stirnwand aufweisen, die entlang der Grundkörperlängsachse im Abstand voneinander angeordnet sind. Die Funktionskörper-Umfangswand kann zum Beispiel zylinderförmig sein. Die erste Funktionskörper-Stirnwand kann zum Beispiel scheibenförmig sein. Die zweite Funktionskörper-Stirnwand kann zum Beispiel scheibenförmig sein. Die erste Funktionskörper-Stirnwand und die zweite Funktionskörper-Stirnwand können zum Beispiel (zumindest im Wesentlichen) parallel zueinander angeordnet sein. Die erste Grundkörper-Stirnwand, die zweite Grundkörper-Stirnwand, die erste Funktionskörper-Stirnwand und die zweite Funktionskörper-Stirnwand können zum Beispiel (alle) (zumindest im Wesentlichen) parallel zueinander angeordnet sein. Die erste Funktionskörper-Stirnwand und die zweite Funktionskörper-Stirnwand können zum Beispiel fluiddicht mit der Funktionskörper-Umfangswand verbunden sein.

Die Funktionskörper-Umfangswand kann sich optional zumindest größtenteils entlang der Grundkörper-Umfangswand an dieser anliegend erstrecken, und die erste und die zweite Funktionskörper-Stirnwand können sich jeweils zugeordnet entlang der ersten und der zweiten Grundkörper-Stirnwand an diesen anliegend erstrecken. Die Rohrleitungen können zum Beispiel (direkt) an der Funktionskörper-Umfangswand angeschlossen sein. Die Rohrleitungen können zum Beispiel fluiddicht an der Funktionskörper-Umfangswand angeschlossen sein. Die Funktionskörper-Umfangswand kann zum Beispiel von der Grundkörper-Umfangswand (radial) abgestützt sein.

In der Grundkörper-Umfangswand können optional ein oder mehrere, bezüglich der Grundkörperlängsachse radial verlaufende Umfangswand-Durchgangslöcher mit einer jeweiligen Innenwandung ausgebildet sein, durch welche sich optional jeweils zugeordnet die eine oder die mehreren Rohrleitungen radial von dem äußeren Funktionskörper aus in ein Inneres des inneren Grundkörpers erstrecken, wobei optional zwischen der Innenwandung eines jeweiligen Umfangswand-Durchgangslochs und der zugehörigen, sich hindurch erstreckenden Rohrleitung ein nicht fluiddichter Bereich vorliegen kann.

Optional kann eine Querschnittsfläche eines jeweiligen Umfangswand-Durchgangslochs größer sein als eine Querschnittsfläche der zugehörigen Rohrleitung, wobei optional zwischen der Innenwandung des jeweiligen Umfangswand-Durchgangslochs und einem Außenumfang der zugehörigen, sich hindurch erstreckenden Rohrleitung ein sich entlang einem gesamten Umfang der Innenwandung erstreckender Spalt vorliegen kann. Optional kann zum Beispiel ein Durchmesser eines jeweiligen Umfangswand-Durchgangslochs größer sein als ein Durchmesser einer zugehörigen Rohrleitung. Optional kann die Breite des Spalts zum Beispiel so gewählt sein, dass bei einer auftretenden Relativverdrehung des Funktionskörpers bezüglich des Grundkörpers um die Grundkörperlängsachse kein Kontakt zwischen der Innenwandung eines jeweiligen Umfangswand-Durchgangslochs und der zugehörigen Rohrleitung zustande kommt.

Das Grundkörpermaterial kann optional von einem faserverstärkten Kunststoff oder einem Metallmaterial gebildet sein, und das Funktionskörpermaterial kann optional von einem nicht faserverstärkten Kunststoff gebildet sein.

An dem Funktionskörper kann optional zumindest ein Mitnehmer-Vorsprung ausgebildet sein, welcher von dem Funktionskörper aus nach innen in eine zugehörige Mitnahme-Aussparung eingreift, die im Grundkörper ausgebildet ist, um eine Relativverdrehung des Funktionskörpers bezüglich des Grundkörpers um die Grundkörperlängsachse herum zu verhindern (z.B. zu blockieren). Optional können mehrere Mitnehmer-Vorsprünge an dem Funktionskörper ausgebildet sein und mehrere Mitnahme-Aussparungen in dem Grundkörper ausgebildet sein, in die ein jeweils zugeordneter Mitnehmer-Vorsprung eingreift. Der Mitnehmer-Vorsprung oder die Mitnehmer-Vorsprünge können optional zum Beispiel an der ersten und/oder der zweiten Funktionskörper-Stirnwand und/oder an der Funktionskörper-Umfangswand ausgebildet sein. Entsprechend kann/können die Mitnahme-Aussparung/en zum Beispiel an der ersten und/oder der zweiten Grundkörper-Stirnwand und/oder an der Grundkörper-Umfangswand ausgebildet sein. Optional kann zum Beispiel eine Querschnittsfläche eines entsprechenden Mitnehmer-Vorsprungs im Wesentlichen gleich oder gleich sein wie eine Querschnittsfläche einer zugehörigen Mitnahme-Aussparung. Der Mitnehmer-Vorsprung kann zum Beispiel fluiddicht mit dem Funktionskörper verbunden sein.

Die Filtertrommel kann optional eine Mehrzahl von Funktionsbauteilen haben, wobei zumindest ein Großteil (zum Beispiel zumindest 50%, zum Beispiel zumindest 60%, zum Beispiel zumindest 70%, zum Beispiel zumindest 80%, zum Beispiel zumindest 90%, zum Beispiel zumindest 95%) der Mehrzahl von Funktionsbauteilen, optional alle Funktionsbauteile, an dem Funktionskörper befestigt sind und nur indirekt über den Funktionskörper an dem Grundkörper angebracht sind. Eine die Filtertrommel antreibende Antriebswelle wird nicht zu den Funktionsbauteilen gezählt; eine solche Antriebswelle ist z.B. mit dem Grundkörper verbunden, z.B. in direkter Weise, und ist nur indirekt über den Grundkörper mit dem Funktionskörper verbunden. Solche Funktionsbauteile können zum Beispiel Ringleisten und/oder Trennleisten sein, welche eine/die (äußere) Mantelfläche der Filtertrommel, zum Beispiel die äußere Mantelfläche der Funktionskörper-Umfangswand, in Filterzellen unterteilen. Jede der Ringleisten kann optional in Umfangsrichtung der Filtertrommel und entlang des gesamten Umfangs der Filtertrommel an der bezüglich der Grundkörperlängsachse radial außen liegenden Seite der Funktionskörper-Umfangswand angeordnet sein. Jede der Trennleisten kann zum Beispiel parallel zu der Grundkörperlängsachse an der bezüglich der Grundkörperlängsachse radial außen liegenden Seite der Funktionskörper-Umfangswand angeordnet sein und z.B. jeweils Ringleisten (z.B. zwei Ringleisten) miteinander verbinden. Optional kann ein Funktionsbauteil zum Beispiel eine Antriebswellenhülse sein, welche die optionale Antriebswelle der Filtertrommel umhüllt. Optional kann ein Funktionsbauteil zum Beispiel eine Steuerscheibe sein, an der die Rohrleitungen befestigt sind. Optional können die Funktionsbauteile (z.B. teilweise) aus dem gleichen Material wie der Funktionskörper sein. Auch die Rohrleitungen stellen z.B. Funktionsbauteile der Filtertrommel dar.

Die Funktionsbauteile sind zum Beispiel fluiddicht mit dem Funktionskörper verbunden. Die Steuerscheibe kann zum Beispiel fluiddicht mit der ersten Funktionskörper-Stirnwand oder der zweiten Funktionskörper-Stirnwand verbunden sein. Die Antriebswellenhülse kann zum Beispiel Fluiddicht mit der Steuerscheibe verbunden sein. Die Antriebswellenhülse kann zum Beispiel Fluiddicht mit der ersten Funktionskörper-Stirnwand und/oder der zweiten Funktionskörper-Stirnwand verbunden sein. Die Antriebswellenhülse kann zum Beispiel fluiddicht mit der Antriebswelle verbunden sein. Die Rohrleitungen können zum Beispiel fluiddicht mit der Steuerscheibe verbunden sein. Der innere Grundkörper kann zum Beispiel mittels des äußeren Funktionskörpers und den mit dem äußeren Funktionskörper fluiddicht verbundenen Funktionsbauteilen zur Außenseite hin, z.B. nach außen hin, fluiddicht umgeben sein, sodass keine Suspension an den inneren Grundkörper gelangen kann. Ein Innenraum, welcher von dem äußeren Funktionskörper und den Funktionsbauteilen umgeben ist, kann zum Beispiel fluiddicht gegenüber einem entsprechenden Außenraum sein, sodass keine Suspension in den Innenraum gelangt.

Das Funktionskörpermaterial kann z.B. von einem Thermoplast und/oder einem Fluorpolymer gebildet sein. Optional kann das Funktionskörpermaterial zum Beispiel von einem Polypropylen (PP), Polyethylen (PE), Polyvinylchlorid (PVC), chlorierten/nachchlorierten Polyvinylchlorid (PVC-C), Polyvinylidenfluorid (PVDF), Polyethylen-co-chlortrifluorethylen (E-CTFE), Polytetrafluorethylen (PTFE), modifizierten PTFE, Perfluoralkoxy-Polymer (PFA) und/oder Tetrafluorethylen-Hexafluorpropylen-Copolymer (FEP) gebildet sein.

Das Grundkörpermaterial kann z.B. von einem glasfaserverstärkten Kunststoff und/oder einem kohlefaserverstärkten Kunststoff gebildet sein. Optional kann das Grundkörpermaterial zum Beispiel von einem glas- und/oder kohlefaserverstärkten Polyesterharz, einem glas- und/oder kohlefaserverstärkten Vinylesterharz, einem glas- und/oder kohlefaserverstärkten Epoxidharz und/oder einem glas- und/oder kohlefaserverstärkten Polyurethanharz gebildet sein.

Durch die Erfindung ist eine Vakuum- und/oder Druck-Trommelfiltervorrichtung bereitgestellt, die eine Filtertrommel aufweist, deren innerer Grundkörper mittels des äußeren Funktionskörpers fluiddicht nach außen hin umgeben ist bzw. eingekapselt ist, wobei der äußere Funktionskörper zumindest größtenteils eine außen am inneren Grundkörper nicht fluiddicht anliegende äußere Verkleidung des inneren Grundkörpers bildet. Dadurch ist es möglich, eine Dichtigkeit des äußeren Funktionskörpers einfach zu prüfen, zum Beispiel durch mit Druck oder mit Vakuum beaufschlagen des Inneren des äußeren Funktionskörpers, wodurch ein Leck, ein Riss oder dergleichen im äußeren Funktionskörper einfach ermittelt werden kann. Die Dichtigkeitsprüfung kann vor Inbetriebnahme der Trommel und in regelmäßigen Wartungsintervallen durchgeführt werden, sodass eine Betriebsdauer der Vakuum- und/oder Druck-Trommelfiltervorrichtung durch zügiges Feststellen eines Dichtigkeitsproblems verlängert werden kann.

Beispielgebende, aber nicht einschränkende Ausführungsformen der vorliegenden Erfindung sind in den Figuren dargestellt und werden im Folgenden näher erläutert.

Es zeigen:
Figur 1 eine schematische Teil-Schnittansicht einer Vakuum- und/oder Druck-Trommelfiltervorrichtung gemäß einer ersten Ausführungsform der vorliegenden Erfindung.
Figur 2 eine schematische Teil-Schnittansicht einer Vakuum- und/oder Druck-Trommelfiltervorrichtung gemäß einer zweiten Ausführungsform der vorliegenden Erfindung.
Figur 3 eine schematische, teilweise geschnittene, räumliche Ansicht einer Vakuum- und/oder Druck-Trommelfiltervorrichtung gemäß einer dritten Ausführungsform der vorliegenden Erfindung.
Figur 4 eine schematische, räumliche Ansicht einer Vakuum- und/oder Druck-Trommelfiltervorrichtung gemäß einer vierten Ausführungsform der vorliegenden Erfindung.

In den Figuren werden identische oder ähnliche Elemente mit identischen Bezugszeichen versehen, soweit dies zweckmäßig ist.

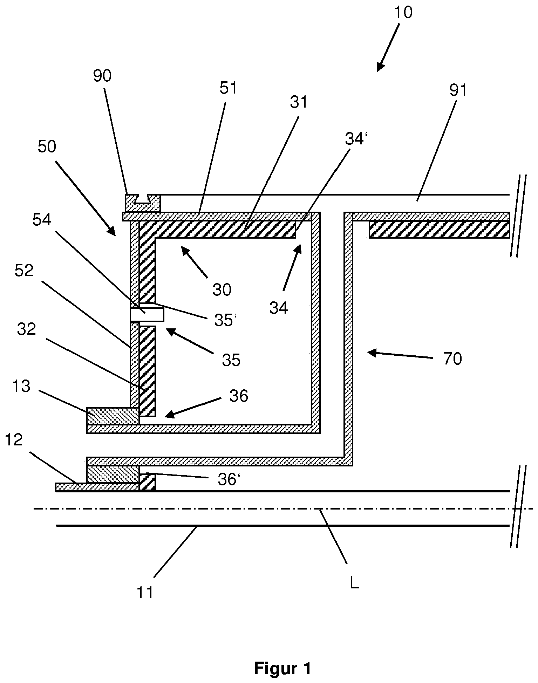

**Figur 1** zeigt eine vereinfachte, schematische Teil-Schnittansicht einer Vakuum- und/oder Druck-Trommelfiltervorrichtung gemäß einer ersten Ausführungsform der vorliegenden Erfindung, wobei einige Bauteile der Vakuum- und/oder Druck-Trommelfiltervorrichtung weggelassen sind.

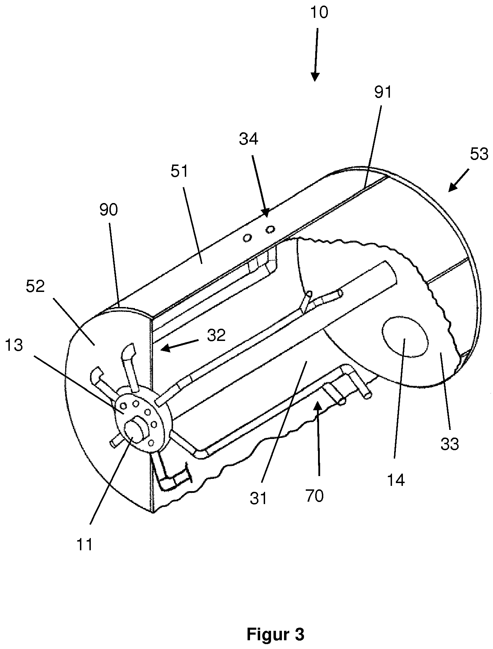

Wie hier gezeigt weist eine Vakuum- und/oder Druck-Trommelfiltervorrichtung gemäß der vorliegenden Ausführungsform eine Filtertrommel 10 auf, die einen trommelförmigen inneren Grundkörper 30 und einen trommelförmigen äußeren Funktionskörper 50 hat. Der innere Grundkörper 30 ist hier aus einem glasfaserverstärkten Kunststoff (GFK) hergestellt und definiert eine Grundkörperlängsachse L. Der äußere Funktionskörper 50 ist hier aus einem Polypropylen (PP) hergestellt und umgibt den inneren Grundkörper 30. Der innere Grundkörper 30 ist von dem äußeren Funktionskörper 50 formschlüssig sowie nicht am inneren Grundkörper 30 anhaftend umgeben, sodass der äußere Funktionskörper 50 eine außen am inneren Grundkörper 30 nicht fluiddicht anliegende äußere Verkleidung des inneren Grundkörpers 30 bildet. Der äußere Funktionskörper 50 ist (zumindest) größtenteils am inneren Grundkörper 50 abgestützt. Der innere Grundkörper 30 hat eine (zumindest) im Wesentlichen zylindrische Grundkörper-Umfangswand 31, die sich um die Grundkörperlängsachse L herum erstreckt, sowie eine erste scheibenförmige Grundkörper-Stirnwand 32 und eine zweite (in Figur 1 nicht gezeigte; siehe hierzu Figur 3) scheibenförmige Grundkörper-Stirnwand 33, die entlang der Grundkörperlängsachse L im Abstand voneinander und (zumindest) im Wesentlichen parallel zueinander angeordnet sind. Der äußere Funktionskörper 50 hat eine (zumindest) im Wesentlichen zylindrische Funktionskörper-Umfangswand 51, die sich um die Grundkörperlängsachse L herum erstreckt, sowie eine erste Funktionskörper-Stirnwand 52 und eine zweite (in Figur 1 nicht gezeigte; siehe hierzu Figur 3) Funktionskörper-Stirnwand 53, die entlang der Grundkörperlängsachse L im Abstand voneinander und (zumindest) im Wesentlichen parallel zueinander angeordnet sind. Die Funktionskörper-Umfangswand 51 erstreckt sich entlang der Grundkörper-Umfangswand 31 und ist an dieser anliegend. Die erste Funktionskörper-Stirnwand 52 erstreckt sich entlang der ersten Grundkörper-Stirnwand 32 und ist an dieser anliegend. Die zweite Funktionskörper-Stirnwand 53 erstreckt sich entlang der zweiten Grundkörper-Stirnwand 33 und ist an dieser anliegend (siehe hierzu Figur 3). Die Funktionskörper-Umfangswand 51 ist mit der ersten Funktionskörper-Stirnwand 52 und mit der zweiten Funktionskörper-Stirnwand 53 fluiddicht verbunden.

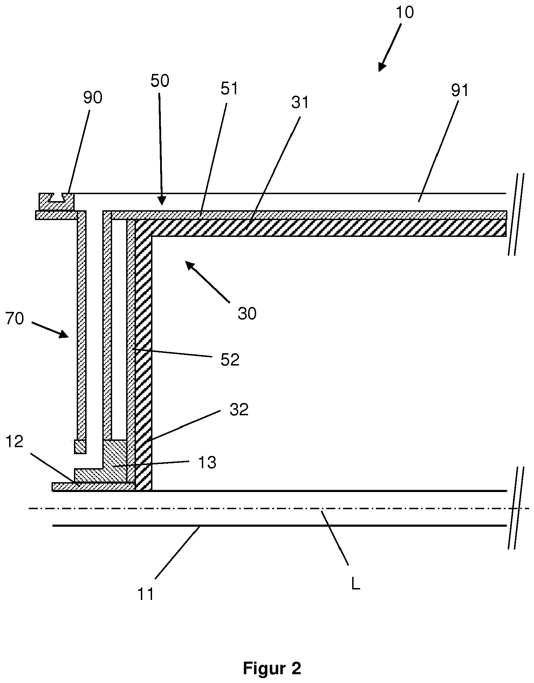

Die hier gezeigte Vakuum- und/oder Druck-Trommelfiltervorrichtung weist ferner eine drehbare Antriebswelle 11 auf, an welcher die erste Grundkörper-Stirnwand 32 und die zweite Grundkörper-Stirnwand 33 des inneren Grundkörpers 30 befestigt sind (siehe hierzu auch Figuren 2 und 3). Die Antriebswelle 11 kann mittels eines (nicht gezeigten) Antriebs rotiert werden, um dadurch die Filtertrommel 10 zu rotieren. Die hier gezeigte Vakuum- und/oder Druck-Trommelfiltervorrichtung weist ferner eine Antriebswellenhülse 12 auf. Die Antriebswellenhülse 12 umgibt die Antriebswelle 11 hier in einem Bereich der Antriebswelle 11, der außerhalb des inneren Grundkörpers 30 ist, in Umfangsrichtung vollständig. Die hier gezeigte Vakuum- und/oder Druck-Trommelfiltervorrichtung weist ferner eine Steuerscheibe 13 auf. Die Steuerscheibe 13 ist an der Antriebswelle 11 angeordnet und umgibt diese in Umfangsrichtung vollständig. Hier ist die Antriebswelle 11 aus einem glasfaserverstärktem Kunststoff (GFK) hergestellt und die Steuerscheibe 13 sowie die Antriebswellenhülse 12 sind aus einem Polypropylen (PP) hergestellt. Hier ist die Antriebswellenhülse 12 fluiddicht mit der Antriebswelle 11 verbunden, die Steuerscheibe 13 ist fluiddicht mit der Antriebswellenhülse 12 verbunden, und die Steuerscheibe 13 ist fluiddicht mit der ersten Funktionskörper-Stirnwand 52 verbunden.

Die hier gezeigte Vakuum- und/oder Druck-Trommelfiltervorrichtung weist ferner mehrere Rohrleitungen 70 (in Figur 1 ist nur eine Rohrleitung 70 gezeigt) zum Abführen der Flüssigkeit von der Filtertrommel 10 auf. Hierzu sind die Rohrleitungen 70 am äußeren Funktionskörper 50 angeschlossen. In dieser Ausführungsform ist das eine Ende der Rohrleitungen an einer in Trommel-Längsrichtung (zumindest) im Wesentlichen zentralen Position an der Funktionskörper-Umfangswand 51 angeschlossen. Das andere Ende der Rohrleitungen ist an die Steuerscheibe 13 angeschlossen. Wie in Figur 1 gezeigt, sind die Rohrleitungen nur indirekt über den äußeren Funktionskörper 50 an dem inneren Grundkörper 30 angebracht. In der Grundkörper-Umfangswand 31 sind mehrere, bezüglich der Grundkörperlängsachse L radial verlaufende, Umfangswand-Durchgangslöcher 34 mit einer jeweiligen Innenwandung 34' ausgebildet, durch welche sich jeweils zugeordnet die mehreren Rohrleitungen 70 radial von dem äußeren Funktionskörper 50 aus in ein Inneres des inneren Grundkörpers 30 erstrecken (sogenannte Innenverrohrung). Ferner sind in der Grundkörper-Stirnwand 32 mehrere, bezüglich der Grundkörperlängsachse L parallel verlaufende Stirnwand-Durchgangslöcher 36 mit einer jeweiligen Innenwandung 36' ausgebildet, durch welche sich jeweils zugeordnet die mehreren Rohrleitungen 70 von der Steuerscheibe 13 aus in ein Inneres des inneren Grundkörpers 30 erstrecken. Hier sind die Rohrleitungen 70 aus einem Polypropylen (PP) hergestellt. Hier ist eine Querschnittsfläche eines jeweiligen Umfangswand-Durchgangslochs 34 bzw. Stirnwand-Durchgangslochs 36 größer als eine Querschnittsfläche der zugehörigen Rohrleitung 70. Zwischen der Innenwandung des jeweiligen Umfangswand-Durchgangslochs 34 bzw. Stirnwand-Durchgangslochs 36 und einem Außenumfang der zugehörigen, sich hindurch erstreckenden Rohrleitung 70 liegt ein sich entlang einem gesamten Umfang der Innenwandung erstreckender Spalt vor. Das erste Ende der Rohrleitungen 70 ist fluiddicht mit der Funktionskörper-Umfangswand 51 verbunden, und das zweite Ende der Rohrleitungen 70 ist fluiddicht mit der Steuerscheibe 13 verbunden.

Hier ist an der Funktionskörper-Stirnwand 52 des Funktionskörpers 50 ein Mitnehmer-Vorsprung 54 ausgebildet, welcher von der Funktionskörper-Stirnwand 52 aus nach innen in eine Mitnahme-Aussparung 35 eingreift, die in der Grundkörper-Stirnwand 32 des Grundkörpers 30 ausgebildet ist, um eine Relativverdrehung des Funktionskörpers 50 bezüglich des Grundkörpers 30 um die Grundkörperlängsachse L herum zu verhindern. Alternativ dazu oder zusätzlich können mehrere Mitnehmer-Vorsprünge 54 an der Funktionskörper-Stirnwand 52 und mehrere Mitnahme-Aussparungen 35 in der Grundkörper-Stirnwand 32 vorgesehen sein. Hier ist der Mitnehmer-Vorsprung 54 aus einem Polypropylen (PP) hergestellt. Hier ist eine Querschnittsfläche der Mitnahme-Aussparung 35 größer als eine Querschnittsfläche des zugehörigen Mitnehmer-Vorsprungs 54. Bevorzugt ist die Querschnittsfläche der Mitnahme-Aussparung 35 (zumindest) im Wesentlichen gleich der Querschnittsfläche des zugehörigen Mitnehmer-Vorsprungs 54, um die Relativverdrehung des Funktionskörpers 50 bezüglich des Grundkörpers 30 um die Grundkörperlängsachse L herum effektiv zu verhindern. Bevorzugt liegt zwischen einer Innenwandung 35' der Mitnahme-Aussparung 35 und einem Außenumfang des Mitnehmer-Vorsprungs 54 kein Spalt vor, um die Relativverdrehung des Funktionskörpers 50 bezüglich des Grundkörpers 30 um die Grundkörperlängsachse L herum effektiv zu verhindern. Hier sind die Querschnittsflächen bzw. die Durchmesser der Mitnahme-Aussparung 35, des Mitnehmer-Vorsprungs 54, der Umfangswand-Durchgangslöcher 34, der Stirnwand-Durchgangslöcher 36 und der Rohrleitungen 70 so gestaltet, dass im Falle der Relativverdrehung des Funktionskörpers 50 bezüglich des Grundkörpers 30 um die Grundkörperlängsachse L herum die Relativverdrehung durch den Mitnehmer-Vorsprung 54, der in die Mitnahme-Aussparung 35 eingreift, unterbunden ist. Dadurch wirkt keine Kraft von den Umfangswand-Durchgangslöchern 34 bzw. den Stirnwand-Durchgangslöchern 36 auf die Rohrleitungen 70 und Schäden an den Rohrleitungen 70 werden effektiv verhindert. Hier ist der Mitnehmer-Vorsprung 54 fluiddicht mit der Funktionskörper-Stirnwand 52 verbunden.

Hier sind ferner zwei Ringleisten 90 und mehrere Trennleisten 91 (in Figur 1 ist jeweils nur eine davon zu sehen) an der Außenseite der Funktionskörper-Umfangswand 51 befestigt. Durch die Ringleisten 90 und die Trennleisten 91 ist die äußere Mantelfläche der Funktionskörper-Umfangswand 52 in Filterzellen unterteilt. Die Ringleisten 90 sind in Umfangsrichtung der Filtertrommel und entlang des gesamten Umfangs der Filtertrommel an der Umfangswand 52 angeordnet. Die Ringleisten sind entlang der Grundkörperlängsachse L im Abstand voneinander an der Umfangswand 52 angeordnet. Die Trennleisten 91 sind (zumindest) im Wesentlichen parallel zu der Grundkörperlängsachse L, in gleichmäßigen Abständen in Umfangsrichtung an der Umfangswand 52 angeordnet und verbinden die beiden Ringleisten 90, so dass bezüglich der Filterfläche (zumindest) im Wesentlichen gleich große Filterzellen ausgebildet sind.

**Figur 2** zeigt eine vereinfachte, schematische Teil-Schnittansicht einer Vakuum- und/oder Druck-Trommelfiltervorrichtung gemäß einer zweiten Ausführungsform der vorliegenden Erfindung, wobei einige Bauteile der Vakuum- und/oder Druck-Trommelfiltervorrichtung weggelassen sind.

Es werden im Folgenden die Unterschiede zwischen der ersten Ausführungsform und der zweiten Ausführungsform erläutert und die Beschreibung von gleichen Bauteilen, die mit den gleichen Bezugszeichen versehen sind, ist weggelassen. Im Gegensatz zur ersten Ausführungsform verlaufen die Rohrleitungen 70 dieser Ausführungsform außerhalb des inneren Grundkörpers 30 (sogenannte Außenverrohrung) und der innere Grundkörper 30 weist keine Umfangswand-Durchgangslöcher 34 und keine Stirnwand-Durchgangslöcher 36 auf. Ferner weist die hier gezeigte Ausführungsform keinen Mitnehmer-Vorsprung 54 und keine Mitnahme-Aussparung 35 auf.

Die hier gezeigte Vakuum- und/oder Druck-Trommelfiltervorrichtung weist mehrere Rohrleitungen 70 (in Figur 2 ist nur eine Rohrleitung 70 gezeigt) zum Abführen der Flüssigkeit von der Filtertrommel 10 auf. Hierzu sind die Rohrleitungen 70 am äußeren Funktionskörper 50 angeschlossen. In dieser Ausführungsform ist das eine Ende der Rohrleitungen 70 an einer in Trommel-Längsrichtung (zumindest) im Wesentlichen endständigen Position an der Funktionskörper-Umfangswand 51 angeschlossen, so dass die Rohrleitungen 70 hier an der Stirnseite der Filtertrommel 10 an den Funktionskörper 50 angeschlossen sind. Das andere Ende der Rohrleitungen 70 ist an die Steuerscheibe 13 angeschlossen. Wie in Figur 2 gezeigt, sind die Rohrleitungen 70 auch hier nur indirekt über den äußeren Funktionskörper 50 an dem inneren Grundkörper 30 angebracht.

**Figur 3** zeigt eine schematische, teilweise geschnittene, räumliche Ansicht einer Vakuum- und/oder Druck-Trommelfiltervorrichtung gemäß einer dritten Ausführungsform der vorliegenden Erfindung, wobei einige Bauteile der Vakuum- und/oder Druck-Trommelfiltervorrichtung weggelassen sind.

Es werden im Folgenden die Unterschiede zwischen der ersten Ausführungsform und der dritten Ausführungsform erläutert und die Beschreibung von gleichen Bauteilen, die mit den gleichen Bezugszeichen versehen sind, ist weggelassen.

Im Gegensatz zur ersten Ausführungsform verlaufen die Rohrleitungen 70 dieser Ausführungsform teilweise außerhalb des inneren Grundkörpers 30. Ferner weist jede der Rohrleitungen 70 eine Verzweigung auf, so dass pro Filterzelle zwei Anschlüsse einer Rohrleitung 70 zum Abführen des Filtrats vorgesehen sind.

Die hier gezeigte Vakuum- und/oder Druck-Trommelfiltervorrichtung weist mehrere Rohrleitungen 70 zum Abführen der Flüssigkeit von der Filtertrommel 10 auf. Hierzu sind die Rohrleitungen 70 am äußeren Funktionskörper 50 angeschlossen. In dieser Ausführungsform ist das eine Ende der Rohrleitungen 70 an einer in Trommel-Längsrichtung (zumindest) im Wesentlichen zentralen Position an der Funktionskörper-Umfangswand 51 angeschlossen, wobei das eine Ende der Rohrleitungen 70 in dieser Ausführungsform in zwei Anschlussteile verzweigt ist und die beiden Anschlussteile an der Funktionskörper-Umfangswand 51 angeschlossen sind. Das andere Ende der Rohrleitungen 70 ist an die Steuerscheibe 13 angeschlossen. Wie in der ersten Ausführungsform sind auch hier die Rohrleitungen 70 nur indirekt über den äußeren Funktionskörper 50 an dem inneren Grundkörper 30 angebracht. Im Unterschied zu der ersten Ausführungsform erstrecken sich die Rohrleitungen 70 radial von der Steuerscheibe 13 parallel zu der ersten Funktionskörper-Stirnwand 52 und werden dann durch die erste Funktionskörper-Stirnwand 52 und die erste Grundkörper-Stirnwand 32 hindurch in ein Inneres des inneren Grundkörpers 30 geführt.

Ferner weist die hier gezeigte Vakuum- und/oder Druck-Trommelfiltervorrichtung eine Wartungsöffnung 14 auf, die sich durch die zweite Funktionskörper-Stirnwand 53 und die zweite Grundkörper-Stirnwand 33 hindurch erstreckt. Die Wartungsöffnung 14 ermöglicht einen Zugang in das Innere des inneren Grundkörpers 30, um zum Beispiel die Rohrleitungen 70, die im Inneren des inneren Grundkörpers 30 verlaufen, zu überprüfen. Die Wartungsöffnung 14 ist fluiddicht verschließbar.

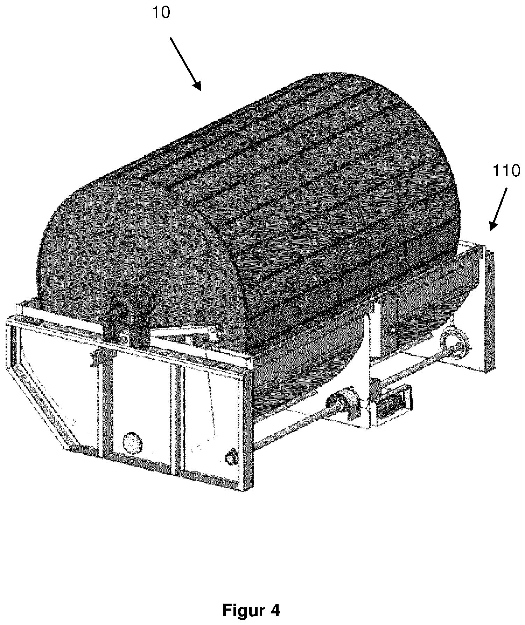

**Figur 4** zeigt eine schematische, räumliche Ansicht einer Vakuum- und/oder Druck-Trommelfiltervorrichtung gemäß einer vierten Ausführungsform der vorliegenden Erfindung, wobei einige Bauteile der Vakuum- und/oder Druck-Trommelfiltervorrichtung weggelassen sind.

Die hier gezeigte Vakuum- und/oder Druck-Trommelfiltervorrichtung weist eine drehbare Filtertrommel 10, die um ihre Grundkörperlängsachse drehbar ist, und eine Wanne 110 zur Aufnahme einer zu filtrierenden Suspension auf, in der die Filtertrommel 10 teilweise aufgenommen ist. Die hier gezeigte Filtertrommel 10 ist eine Filtertrommel 10 gemäß einer der oben beschriebenen ersten bis dritten Ausführungsformen. Die Suspension wird der Wanne 110 kontinuierlich durch eine (nicht gezeigte) Suspension-Zuführleitung zugeführt.

Die vorhergehende Beschreibung von spezifischen beispielgebenden Ausführungsformen der vorliegenden Erfindung wurde präsentiert zum Zwecke der Illustration und Beschreibung. Sie soll nicht erschöpfend sein oder die Erfindung auf die offenbarten präzisen Formen beschränken, und selbstverständlich sind viele Modifikationen und Variationen im Lichte der obigen Lehre möglich. Die beispielgebenden Ausführungsformen wurden ausgewählt und beschrieben, um bestimmte Prinzipien der Erfindung und ihre praktische Anwendung zu erläutern, um hierdurch Fachleuten zu ermöglichen, verschiedene beispielgebende Ausführungsformen der vorliegenden Erfindung sowie verschiedene Alternativen und Modifikationen davon herzustellen und anzuwenden. Es ist beabsichtigt, dass der Umfang der Erfindung durch die hieran angehängten Ansprüche und ihre Äquivalente definiert wird.

## Patentansprüche

1. Vakuum- und/oder Druck-Trommelfiltervorrichtung zum Filtern eines Feststoffmaterials aus einer Suspension, die von dem Feststoffmaterial und einer Flüssigkeit gebildet ist, mit
- einer Filtertrommel (10), welche aufweist
- einen trommelförmigen inneren Grundkörper (30), der aus einem zumindest größtenteils starren Grundkörper-Material hergestellt ist und der eine Grundkörperlängsachse (L) definiert, und
- einen trommelförmigen äußeren Funktionskörper (50), der aus einem zumindest größtenteils starren Funktionskörper-Material hergestellt ist und der den inneren Grundkörper (30) unter Ausbildung einer fluiddichten Einkapselung des inneren Grundkörpers (30) umgibt, wobei
- der innere Grundkörper (30) von dem äußeren Funktionskörper (50) zumindest größtenteils formschlüssig anliegend sowie größtenteils nicht am inneren Grundkörper (30) anhaftend umgeben ist, sodass der äußere Funktionskörper (50) zumindest größtenteils eine äußere Verkleidung des inneren Grundkörpers (30) bildet, die am inneren Grundkörper (30) nicht fluiddicht anliegt, die aber von dem inneren Grundkörper (30) gegen äußere Kräfte abgestützt ist, und
- einer oder mehreren Rohrleitungen (70) zum Abführen der Flüssigkeit von der Filtertrommel (10), welche jeweils an dem äußeren Funktionskörper (50) befestigt sind und welche jeweils zumindest größtenteils nur indirekt über den äußeren Funktionskörper (50) an dem inneren Grundkörper (30) angebracht sind.

2. Vakuum- und/oder Druck-Trommelfiltervorrichtung gemäß Anspruch 1, wobei der trommelförmige innere Grundkörper (30) eine Grundkörper-Umfangswand (31), die sich um die Grundkörperlängsachse (L) herum erstreckt, sowie eine erste und eine zweite Grundkörper-Stirnwand (32, 33) aufweist, die entlang der Grundkörperlängsachse (L) im Abstand voneinander angeordnet sind, wobei der trommelförmige äußere Funktionskörper (50) eine Funktionskörper-Umfangswand (51), die sich um die Grundkörperlängsachse (L) herum erstreckt, sowie eine erste und eine zweite Funktionskörper-Stirnwand (52, 53) aufweist, die entlang der Grundkörperlängsachse (L) im Abstand voneinander angeordnet sind, wobei sich die Funktionskörper-Umfangswand (51) zumindest größtenteils entlang der Grundkörper-Umfangswand (31) an dieser anliegend erstreckt, und wobei sich die erste und die zweite Funktionskörper-Stirnwand (52, 53) jeweils zugeordnet entlang der ersten und der zweiten Grundkörper-Stirnwand (32, 33) an diesen anliegend erstrecken.

3. Vakuum- und/oder Druck-Trommelfiltervorrichtung gemäß Anspruch 2, wobei in der Grundkörper-Umfangswand (31) ein oder mehrere, bezüglich der Grundkörperlängsachse (L) radial verlaufende, Umfangswand-Durchgangslöcher (34) mit einer jeweiligen Innenwandung (34') ausgebildet sind, durch welche sich jeweils zugeordnet die eine oder die mehreren Rohrleitungen (70) radial von dem äußeren Funktionskörper (50) aus in ein Inneres des inneren Grundkörpers (30) erstrecken, wobei zwischen der Innenwandung (34') eines jeweiligen Umfangswand-Durchgangslochs (34) und der zugehörigen, sich hindurch erstreckenden Rohrleitung (70) ein nicht fluiddichter Bereich vorliegt.

4. Vakuum- und/oder Druck-Trommelfiltervorrichtung gemäß Anspruch 3, wobei eine Querschnittsfläche eines jeweiligen Umfangswand-Durchgangslochs (34) größer ist als eine Querschnittsfläche der zugehörigen Rohrleitung (70), wobei optional zwischen der Innenwandung (34') des jeweiligen Umfangswand-Durchgangslochs (34) und einem Außenumfang der zugehörigen, sich hindurch erstreckenden Rohrleitung (70) ein sich entlang einem gesamten Umfang der Innenwandung (34') erstreckender Spalt vorliegt.

5. Vakuum- und/oder Druck-Trommelfiltervorrichtung gemäß einem der Ansprüche 1-4, wobei das Grundkörpermaterial von einem faserverstärkten Kunststoff oder einem Metallmaterial gebildet ist, und wobei das Funktionskörpermaterial von einem nicht faserverstärkten Kunststoff gebildet ist.

6. Vakuum- und/oder Druck-Trommelfiltervorrichtung gemäß einem der Ansprüche 1-5, wobei an dem Funktionskörper (50) zumindest ein Mitnehmer-Vorsprung (54) ausgebildet ist, welcher von dem Funktionskörper (50) aus nach innen in eine Mitnahme-Aussparung (35) eingreift, die im Grundkörper (30) ausgebildet ist, um eine Relativverdrehung des Funktionskörpers (50) bezüglich des Grundkörpers (30) um die Grundkörperlängsachse (L) herum zu verhindern.

7. Vakuum- und/oder Druck-Trommelfiltervorrichtung gemäß einem der Ansprüche 1-6, wobei die Filtertrommel eine Mehrzahl von Funktionsbauteilen (90, 91) aufweist, wobei zumindest ein Großteil der Mehrzahl von Funktionsbauteilen (90, 91), optional alle Funktionsbauteile (90, 91), an dem Funktionskörper (50) befestigt sind und nur indirekt über den Funktionskörper (50) an dem Grundkörper (30) angebracht sind.

8. Vakuum- und/oder Druck-Trommelfiltervorrichtung gemäß einem der Ansprüche 1-7, wobei das Funktionskörpermaterial von einem Thermoplast und/oder einem Fluorpolymer gebildet ist, optional von einem Polypropylen (PP), Polyethylen (PE), Polyvinylchlorid (PVC), chlorierten/nachchlorierten Polyvinylchlorid (PVC-C), Polyvinylidenfluorid (PVDF), Polyethylen-co-chlortrifluorethylen (E-CTFE), Polytetrafluorethylen (PTFE), modifizierten PTFE, Perfluoralkoxy-Polymer (PFA) und/oder Tetrafluorethylen-Hexafluorpropylen-Copolymer (FEP) gebildet ist.

9. Vakuum- und/oder Druck-Trommelfiltervorrichtung gemäß einem der Ansprüche 1-8, wobei das Grundkörpermaterial von einem glasfaserverstärkten Kunststoff und/oder einem kohlefaserverstärkten Kunststoff gebildet ist, optional von einem glas- und/oder kohlefaserverstärkten Polyesterharz, einem glas- und/oder kohlefaserverstärkten Vinylesterharz, einem glas- und/oder kohlefaserverstärkten Epoxidharz und/oder einem glas- und/oder kohlefaserverstärkten Polyurethanharz gebildet ist.

## Claims

1. Vacuum and/or pressure drum filtering device for filtering a solid material from a suspension formed by the solid material and a liquid, comprising:
- a filter drum (10), comprising
- a drum-shaped inner base body (30) which is made of an at least for the most part rigid base body material and which defines a base body longitudinal axis (L), and
- a drum-shaped outer functional body (50) which is made of an at least for the most part rigid functional body material and which surrounds the inner base body (30), thereby forming a fluid-tight encapsulation of the inner base body (30), wherein
- the inner base body (30) is surrounded by the outer functional body (50) at least for the most part abutting in a form-fitting manner and for the most part not adhering to the inner base body (30), so that the outer functional body (50) at least for the most part forms an outer covering of the inner base body (30), which does not rest against the inner base body (30) in a fluid-tight manner, which, however, is supported by the inner base body (30) against external forces, and
- one or more pipes (70) for discharging the liquid from the filter drum (10), which are respectively attached to the outer functional body (50) and which are respectively attached to the inner base body (30) at least for the most part only indirectly via the outer functional body (50).

2. Vacuum and/or pressure drum filtering device according to claim 1, wherein
the drum-shaped inner base body (30) comprises a base body circumferential wall (31) extending around the base body longitudinal axis (L), and first and second base body front walls (32, 33) arranged at a distance from one another along the base body longitudinal axis (L), the drum-shaped outer functional body (50) comprising a functional body circumferential wall (51) extending around the base body longitudinal axis (L), as well as first and second functional body front walls (52, 53) which are arranged at a distance from one another along the base body longitudinal axis (L), wherein the functional body circumferential wall (51) extends at least for the most part along the base body circumferential wall (31) resting against the same, and wherein
the first and second functional body front walls (52, 53) extend respectively associated along the first and second base body front walls (32, 33) resting against the same.

3. Vacuum and/or pressure drum filtering device according to claim 2, wherein one or more circumferential wall through-holes (34), which extend radially with respect to the base body longitudinal axis (L), are formed in the base body circumferential wall (31) with a respective inner wall (34'), through which the one or more pipes (70) extend radially from the outer functional body (50) into an interior of the inner base body (30), in a respectively associated way, wherein a non-fluid-tight region is present between the inner wall (34') of a respective circumferential wall through-hole (34) and the associated pipe (70) extending therethrough.

4. Vacuum and/or pressure drum filtering device according to claim 3, wherein a cross-sectional area of a respective circumferential wall through-hole (34) is greater than a cross-sectional area of the associated pipe (70), wherein optionally a gap extending along an entire circumference of the inner wall (34') is present between the inner wall (34') of the respective circumferential wall through-hole (34) and an outer circumference of the associated pipe (70) extending therethrough.

5. Vacuum and/or pressure drum filtering device according to any one of claims 1-4, wherein the base body material is formed by a fiber reinforced plastic or a metal material, and wherein the functional body material is formed by a non-fiber reinforced plastic.

6. Vacuum and/or pressure drum filtering device according to any one of claims 1-5, wherein at least one driving projection (54) is formed on the functional body (50), which engages inwardly from the functional body (50) in a driving recess (35) formed in the base body (30) in order to prevent relative rotation of the functional body (50) with respect to the base body (30) about the base body longitudinal axis (L).

7. Vacuum and/or pressure drum filtering device according to any one of claims 1-6, wherein the filter drum comprises a plurality of functional components (90, 91), wherein
at least a majority of the plurality of functional components (90, 91), optionally all functional components (90, 91), are attached to the functional body (50) and are only indirectly attached to the base body (30) via the functional body (50).

8. Vacuum and/or pressure drum filtering device according to any one of claims 1-7, wherein the functional body material is formed by a thermoplastic and/or a fluoropolymer, optionally by a polypropylene (PP), polyethylene (PE), polyvinyl chloride (PVC), chlorinated/post-chlorinated polyvinyl chloride (PVC-C), polyvinylidene fluoride (PVDF), polyethylene-co-chlorotrifluoroethylene (E-CTFE), polytetrafluoroethylene (PTFE), modified PTFE, perfluoroalkoxy polymer (PFA) and/or tetrafluoroethylene-hexafluoropropylene copolymer (FEP).

9. Vacuum and/or pressure drum filtering device according to any one of claims 1-8, wherein the base body material is formed by a glass fiber reinforced plastic and/or a carbon fiber reinforced plastic, optionally by a glass and/or carbon fiber reinforced polyester resin, a glass and/or carbon fiber reinforced vinyl ester resin, a glass and/or carbon fiber reinforced epoxy resin and/or a glass and/or carbon fiber reinforced polyurethane resin.

## Revendications

1. Dispositif de filtrage à tambour à vide et/ou à pression pour le filtrage d'un matériau solide à partir d'une suspension qui est formée du matériau solide et d'un liquide, avec
- un tambour de filtrage (10) qui comprend
- un corps de base interne en forme de tambour (30), qui est formé d'un matériau de corps de base rigide au moins en majeure partie et qui définit un axe longitudinal de corps de base (L) et
- un corps fonctionnel externe en forme de tambour (50) qui est formé d'un matériau de corps fonctionnel rigide au moins en majeure partie et qui entoure le corps de base interne (30) en formant une encapsulation étanche aux fluides du corps de base interne (30), dans lequel
- le corps de base interne (30) est entouré par le corps fonctionnel externe (50) de façon à s'appuyer au moins en majeure partie par complémentarité de forme ainsi qu'en majeure partie de façon à ne pas adhérer au corps de base interne (30), de façon à ce que le corps fonctionnel externe (50) forme au moins en majeure partie un carénage externe du corps de base interne (30), qui s'appuie de manière non étanche aux fluides contre le corps de base interne (30), mais qui est soutenu par le corps de base interne (30) contre des forces externes et
- une ou plusieurs canalisations (70) pour l'évacuation du liquide hors du tambour de filtrage (10), qui sont fixées chacune au corps fonctionnel externe (50) et qui sont montées chacune au moins en majeure partie seulement indirectement par l'intermédiaire du corps fonctionnel externe (50) sur le corps de base interne (30).

2. Dispositif de filtrage à tambour à vide et/ou à pression selon la revendication 1, dans lequel le corps de base interne en forme de tambour (30) comprend une paroi périphérique de corps de base (31) qui s'étend autour de l'axe longitudinal du corps de base (L), ainsi qu'une première et une deuxième parois frontales de corps de base (32, 33) qui sont disposées le long de l'axe longitudinal de corps de base (L) de manière distante entre elles, dans lequel le corps fonctionnel externe en forme de tambour (50) comprend une paroi périphérique de corps fonctionnel (51), qui s'étend autour de l'axe longitudinal du corps de base (L), ainsi qu'une première et une deuxième parois frontales de corps fonctionnel (52, 53) qui sont disposées le long de l'axe longitudinal de corps de base (L) de manière distante entre elles, dans lequel la paroi périphérique du corps fonctionnel (51) s'étend au moins en majeure partie le long de la paroi périphérique du corps de base (31) de façon à s'appuyer, contre celle-ci et dans lequel les première et deuxième parois frontales du corps fonctionnel (52, 53) s'étendent respectivement le long des première et deuxième parois frontales du corps de base (32, 33) de façon à s'appuyer contre celles-ci.

3. Dispositif de filtrage à tambour à vide et/ou à pression selon la revendication 2, dans lequel, dans la paroi périphérique du corps de base (31), sont réalisés un ou plusieurs trous de passage dans la paroi périphérique (34), s'étendant radialement par rapport à l'axe longitudinal du corps de base (L), avec chacun une paroi interne (34'), à travers lesquels s'étendent les une ou plusieurs canalisations (70) radialement du corps fonctionnel externe (50) vers un intérieur du corps de base interne (30), dans lequel, entre la paroi interne (34') d'un trou de passage dans la paroi périphérique (34) et la canalisation (70) correspondante qui s'étend à travers celui-ci, il existe une zone non étanche aux fluides.

4. Dispositif de filtrage à tambour à vide et/ou à pression selon la revendication 3, dans lequel une surface de section transversale d'un trou de passage dans la paroi périphérique (34) est supérieure à une surface de section transversale de la canalisation (70) correspondante, dans lequel, en option, entre la paroi interne (34') du trou de passage dans la paroi périphérique (34) respectif et une périphérique externe de la canalisation (70) correspondante qui s'étend à travers celui-ci, il existe une fente s'étendant le long de toute la périphérie de la paroi interne (34').

5. Dispositif de filtrage à tambour à vide et/ou à pression selon l'une des revendications 1 - 4, dans lequel le matériau du corps de base est formé d'une matière plastique renforcée par des fibres ou d'un matériau métallique et dans lequel le matériau du corps fonctionnel est formé d'une matière plastique non renforcée par des fibres.

6. Dispositif de filtrage à tambour à vide et/ou à pression selon l'une des revendications 1 - 5, dans lequel, sur le corps fonctionnel (50), est réalisée au moins une saillie d'entraînement (54) qui s'emboîte à partir du corps fonctionnel (50) vers l'intérieur dans un évidement d'entraînement (35), qui est réalisé dans le corps de base (30), afin d'empêcher une rotation relative du corps fonctionnel (50) par rapport au corps de base (30) autour de l'axe longitudinal du corps de base (L).

7. Dispositif de filtrage à tambour à vide et/ou à pression selon l'une des revendications 1 - 6, dans lequel le tambour de filtrage comprend une pluralité de composants fonctionnels (90, 91), dans lequel au moins une grande partie de la pluralité de composants fonctionnels (90, 91), en option tous les composants fonctionnels (90, 91), sont fixés au corps fonctionnel (50) et sont montés seulement indirectiment par l'intermédiaire du corps fonctionnel (50) sur le corps de base (30).

8. Dispositif de filtrage à tambour à vide et/ou à pression selon l'une des revendications 1-7, dans lequel le matériau du corps fonctionnel est formé d'une matière plastique thermoplastique et/ou d'un polymère fluoré, en option d'un polypropylène (PP), d'un polyéthylène (PE), d'un polychlorure de vinyle (PVC), d'un polychlorure de vinyle chloré/surchloré (PVC-C), d'un polyfluorure de vinyle (PVDF), d'un polyéthylène-co-chlorotrifluoroéthylène (E-CTFE), d'un polytétrafluoroéthylène (PTFE), de PTFE modifié, d'un polymère perfluoracoxy (PFA) et/ou d'un copolymère de tétrafluoroéthylène et d'hexafluoropropylène (FEP).

9. Dispositif de filtrage à tambour à vide et/ou à pression selon l'une des revendications 1 - 8, dans lequel le matériau du corps de base est formé d'une matière plastique renforcée par des fibres de verre et/ou d'une matière plastique renforcée par des fibres de carbone, en option d'une résine polyester renforcée par des fibres de verre et/ou renforcée par des fibres de carbone, d'une résine époxy renforcée par des fibres de verre et/ou renforcée par des fibres de carbone et/ou d'une résine polyuréthane renforcée par des fibres de verre et/ou renforcée par des fibres de carbone.
